# EUROPÄISCHE PATENTSCHRIFT

(11) **EP 1 084 905 B1**
(45) Veröffentlichungstag und Bekanntmachung des Hinweises auf die Patenterteilung: **29.08.2001**
(21) Anmeldenummer: 99118559.6
(22) Anmeldetag: 20.09.1999
(51) Int. Cl.: B60P 3/00

(54) **Ladungssicherungsanlage für Glasscheibenpakete**
Load securing device for glass sheet stack
Dispositif de fixation de paquet de feuilles de verre

(43) Veröffentlichungstag der Anmeldung: 21.03.2001
(73) Patentinhaber: Faymonville, Alain, 4760 Büllingen (BE); Faymonville, Yves, 4760 Büllingen (BE)
(72) Erfinder: Faymonville, Alain, 4760 Büllingen (BE); Faymonville, Yves, 4760 Büllingen (BE)
(74) Vertreter: Hentschel, Peter, Dipl.-Ing.

(56) Entgegenhaltungen:
- DE-A- 2 115 913
- DE-A- 2 916 165
- DE-A- 4 041 622
- DE-A- 4 432 785
- DE-U- 7 326 934
- DE-U- 29 722 469
- FR-A- 2 212 249
- US-A- 3 754 516
- US-A- 3 939 780

## Beschreibung

Die Erfindung betrifft eine Anlage zur Sicherung von Glasscheiben, die auf einem Last- oder Eisenbahnwagen verladen sind.

Bei bekannten Anlagen vergleichbarer Art wird jeweils unmittelbar an Distanzstücken gesichert, die zwischen benachbarte, aufrechte Glasscheiben eingelegt sind, die Abmessungen von mehr als 6m Länge und bis zu 3,21 m Höhe aufweisen können und auf einem A- oder L-Gestell aufrecht stehen (DE-A-39 06 429, DE-A-38 42 324 und DE-A-40 41 622). Die Sicherung erfolgt durch fünf, sechs oder sogar sieben Sicherungsplatten je Gestellseite. Diese sind verschieblich angeordnet und können einzeln gesperrt werden. Falsche Einstellungen führen aber rasch zum Glasbruch. Ferner erfolgt die Bewegung der Sicherungsplatten bogenförmig, so daß beim Anpressen oder Lösen diese auch eine Hubbewegung durchführen, so daß etwa beim Lösen die äußere Scheibe mit angehoben werden kann, dann nach unten fällt und dabei zerbrechen kann.

Die DE-A-44 32 785 beschreibt eine Anlage, bei der anstelle kleinerer Sicherungsplatten nur beiderseits je eine großflächige Sicherungstafel vorgesehen ist, die an einem Parallelogrammgetriebe angelenkt ist und somit keine bogenförmige Bewegung durchführt. sondern stets parallel zu sich selbst bleibt. Nichtsdestoweniger führen diese bekannten Sicherungstafeln beim Annähern oder Wegführen zu bzw. von den Glasplatten eine Hubbewegung durch. Eine Einstellung der Winkellage ist nicht vorgesehen; es ist daher eine sehr große Genauigkeit beim Bau der der Anlage und auch beim Beladen des Gestells nötig, da sonst die Winkeleinstellung nicht stimmt und deshalb zu Glasbruch führt.

Die Erfindung stellt sich daher die Aufgabe, die eingangs bezeichnete Anlage dahingehend weiterzubilden, daß der Glasbruch verringert wird und ein Anheben oder Absenken der Glasscheiben entfällt.

Diese Aufgabe wird durch die Anlage des Anspruchs 1 gelöst, wobei die rein horizontale Bewegung der großflächigen Sicherungsplatten das Mitnehmen der angrenzenden Glasplatte unmöglich macht, weil sich die Sicherungsplatte nicht mehr hebt oder senkt, und wobei die schwenkbare Anordung der Sicherungstafeln deren exakte Anpassung an den Neigungswinkel der benachbarten Glasplatte gewährleistet.

Bei der Erfindung kommen Sicherungsplatten zum Einsatz, die auch unabhängig von der Ladung oder der nicht vorhandenen Ladung immer in dieser senkrechten Position gehalten werden, sodass der entsprechende Laderaum immer zur Verfügung steht. Darüberhinaus werden diese Sicherungsplatten bzw. Sicherungstafeln über den Spindelantrieb und die Steuerspindel horizontal in Richtung Gestell hin und her verschoben, sodass es zu dem nachteiligen Anheben oder Absenken der vorderen Glasscheiben gar nicht erst kommen kann. Die Sicherungstafeln legen sich nach der horizontalen Verschiebung gleichmäßig an die mehr oder weniger senkrecht stehenden Glasscheiben an und sorgen auch während des Verfahrens des Lastkraftwagens oder des Eisenbahnwagens dafür, dass die einzelnen Glasscheiben bzw. die Glasscheibenpakete immer sicher fixiert sind. Da die einzelnen Sicherungstafeln, die entsprechend groß dimensioniert sind, mittig auf die Glasscheibenpakete einwirken und zwar unabhängig von den zum Einsatz kommenden Zwischenlagen, ist für ein gleichmäßiges Belasten bzw. Sichern der Glasscheibenpakete Sorge getragen. Die Sicherungstafeln drücken jeweils über mehrere Zwischenlagen, wobei aufgrund ihrer Mittelpunkt-Ansteuerung kürzere Verladungszeiten erzielt werden können. Die Sicherungstafeln können nämlich nach vorn und hinten den jeweiligen Glasstoß überragen, ohne dass die Sicherung beeinträchtigt wäre. Hierdurch entfällt die bis jetzt bei kürzeren Glaslängen erforderliche vordere und hintere Sicherung über entsprechende Sicherungsplatten. Vor allem ist ein Drücken in den Hohlraum nicht mehr möglich, weil diese großen Sicherungsplatten zum Einsatz kommen, sodass Verstellarbeiten völlig entfallen. Für alle Glasabmessungen können die gleichen Fahrzeuge und insbesondere die gleichen Ladungssicherungsanlagen zum Einsatz kommen, sodass die Vielfalt der jetzt benötigten Fahrzeuge bzw. Sicherungssysteme entfällt.

Weitere zweckmäßige Ausführungen bzw. Weiterentwicklungen des Gegenstandes der vorliegenden Erfindung sind Gegenstand der Ansprüche 2 bis 14. Dabei geht es insbesondere darum, je Gestellseite zwei großdimensionierte, übereinander angeordnete Sicherungstafeln vorzusehen, um so mit ein und derselben Glassicherungsanlage unterschiedliche Glaslängen transportieren und absichern zu können. Die zum Einsatz kommenden Sicherungstafeln sind als Aluminiumwabenplatten ausgebildet, verfügen somit über ein geringes Gewicht, sodass durch Verringerung auf zwei Sicherungstafeln je Gestellseite eine Verringerung der Antriebseinheiten aber auch eine Verringerung des Gesamtgewichtes erzielt werden kann. Durch den Einsatz einer Trapezspindel mit geringer Steigung sind sehr geringe Antriebskräfte bei gleichzeitig hoher Zugspannung erforderlich. Die im Fahrzeug vorhandene Energie reicht dazu aus. Durch den in senkrechter Richtung wirkenden Spindelantrieb kann mit einem Antriebsmotor mit wahlweiser Drehrichtung gearbeitet werden. Vorzugsweise werden diese vier Antriebsmotoren über die im Fahrzeug vorhandene Druckluft betrieben. Hierdurch wird eine weitere Energiequelle nicht erforderlich und es ist ein sauberes umweltfreundliches System geschaffen. Wahlweise besteht die Möglichkeit über Elektro- oder Hydraulikantrieb die Spindeln zu steuern. Die Drucksicherung für die geregelten und vorgegebenen Zuspannkräfte kann stufenlos über die Druckluft durchgeführt werden. Durch den Aufbau der Steuerspindel als Trapezspindel und den Ansatzpunkt der Antriebsmotoren im Verhältnis zu den Steuerungsarmen ergibt sich ein Übersetzungsverhältnis, das bei umgekehrter Druckausübung ein Öffnen oder Schließen ohne laufenden Motor sicher verhindert. Die zweifache Lagerung der Steuerungsarme sowie die rechtwinklige Positionierung zur senkrechten Achse des Fahrzeuges ermöglichen es, die Sicherungstafeln ohne jegliche Schwenkbewegung unmittelbar an das zu sichernde Glaspaket anzulegen. Die Aufhängung der Sicherungstafeln ist bis zu einem Winkel von 5° drehbar ausgelegt. Hierdurch können alle Gestellneigungen stufenlos angefahren werden. Gleichzeitig kann hierdurch die Sicherungstafel im aufgefahrenen Zustand in eine senkrechte Position gebracht werden, sodass durchgehend von unten bis oben eine gleiche Ladeschachtbreite wie erwähnt erreicht wird. Die Steuerspindel weist hälftig ein Links- und ein Rechtsgewinde auf, sodass die beiden Steuerungsarme gegeneinander bewegt und die Sicherungstafel dadurch weggeschoben oder an die Spindel herangezogen wird. Diese Anordnung ermöglicht einen sehr flachen Aufbau. Dieser ist je nach Erfordernis bei den verschiedenen Waggons, d. h. den Eisenbahnwagen zu verwirklichen. Des weiteren ist als Antriebsenergie bei den Bahnwagen Druckluft in ausreichender Menge vorhanden, sodass auch beim Eisenbahntransport die beschriebene Anlage zum Einsatz kommen kann. Ein Nachsteuern während der Fahrt des Eisenbahnwagens ist ohne weitere Steuerimpulse nur über eine Druckluftregelung vorteilhaft möglich. Die Steuerspindeln können senkrecht oder horizontal angeordnet werden.

Die Erfindung vermeidet die im Zusammenhang mit der Erläuterung des Standes der Technik aufgezeigten Nachteile und Systemmängel. Es ist erstmals möglich, mit Hilfe des Ladungssicherungssystems das nachteilige Anheben und Absenken der vorderen Glasscheiben vollständig zu vermeiden und gleichzeitig sicherzustellen, dass immer über die Höhe gesehen ein gleicher Laderaum zur Verfügung steht. Vorteilhaft ist sichergestellt, dass mit den großen Sicherungstafeln auf wesentlich weniger Antriebe bzw. Antriebsmotoren und eine von den Abmaßen her günstige Antriebsweise übergegangen wird. Die groß dimensionierten Sicherungstafeln drücken so auf die Glasstöße bzw. die einzelnen Glasscheiben, dass eine Überbeanspruchung einzelner Glasscheiben oder auch Pakete ausgeschlossen ist. Die Ladungssicherungsanlage kann sowohl bei Lastkraftwagen wie auch bei Eisenbahnwagen eingesetzt werden, unabhängig von der Beladungsart des einzelnen Fahrzeuges. Darüber hinaus kann die Ladungssicherungsanlage sowohl bei L- wie auch bei den früher fast ausschließlich zum Einsatz kommenden A-Gestellen eingesetzt werden, wobei durchaus auch andere Gestelle einzusetzen sind, weil die einzelnen Glasstöße mit den zwischen ihnen angeordneten Zwischenlagen gleichmäßig von der Mitte her belastet werden, sodass die zur Sicherung vorgesehenen Sicherungstafeln die einzelnen Glaspakete problemlos seitlich überragen können, um so eine gleichmäßige Sicherung vorzugeben. Schließlich kann bei den günstigen Abmessungen auf eine Antriebsenergie, nämlich vor allem die Druckluft zurückgegriffen werden, die umweltfreundlich und systemfreundlich ist. Durch die geringere Anzahl von Sicherungsplatten bzw. Sicherungstafeln, sowie deren Aufbau und ihrem Antrieb können die Ladungssicherungsanlagen preiswerter hergestellt werden und verfügen über ein geringeres Gewicht als die bisher eingesetzten Anlagen. Das Antriebssystem mit den beschriebenen Vorteilen ermöglicht darüber hinaus eine Ladungssicherung, weil die Trapezspindeln sowohl in verspannter Position automatisch gegen Lösen sichern und darüber hinaus auch im aufgefahrenem Zustand. Dies ist vor allem bei niedrigen Steuerdrücken möglich, sodass auch darüber eine Gefährdung der einzelnen Glasscheiben ausgeschlossen wird.

Die vorliegende Erfindung wird anhand der nachfolgenden Figurenbeschreibung weiter erläutert. So zeigen:
- Fig. 1: einen hälftigen Querschnitt der Ladungssicherungsanlage,
- Fig. 2: eine Sicherungstafel mit Steuerungsarm und Trapezspindel in Draufsicht,
- Fig. 3: den Verbindungsbereich zwischen Sicherungstafel und Steuerungsarm in vergrößerter Wiedergabe,
- Fig. 4: einen Lastkraftwagen mit einem Gestell und einer Anlage zur Sicherung der Glaspakete und
- Fig. 5: eine entsprechende Anlage zur Sicherung der Glasscheibenpakete auf einen Einsenbahnwagen montiert.

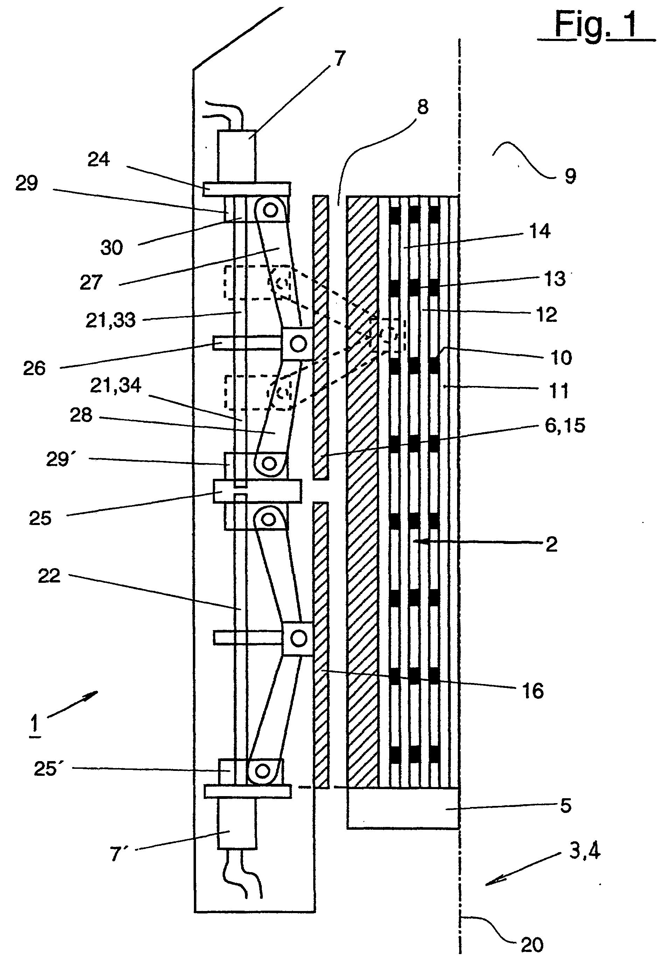

Eine für den Einsatz auf Lastkraft- oder Eisenbahnwagen 3, 4 vorgesehene Ladungssicherungsanlage 1 wird anhand der Darstellung nach Fig. 1 näher erläutert. Das mit 2 gekennzeichnete Glasscheibenpaket ist einem nur angedeuteten Gestell 5 zugeordnet und wird über Sicherungsplatten 6 gesichert. Diese Sicherungsplatten 6 verfügen über einen Spindelantrieb 7, der auf beiden Gestellseiten 8 und 9 vorgesehen ist. Wiedergegeben ist in Fig. 1 allerdings nur die Gestellseite 8.

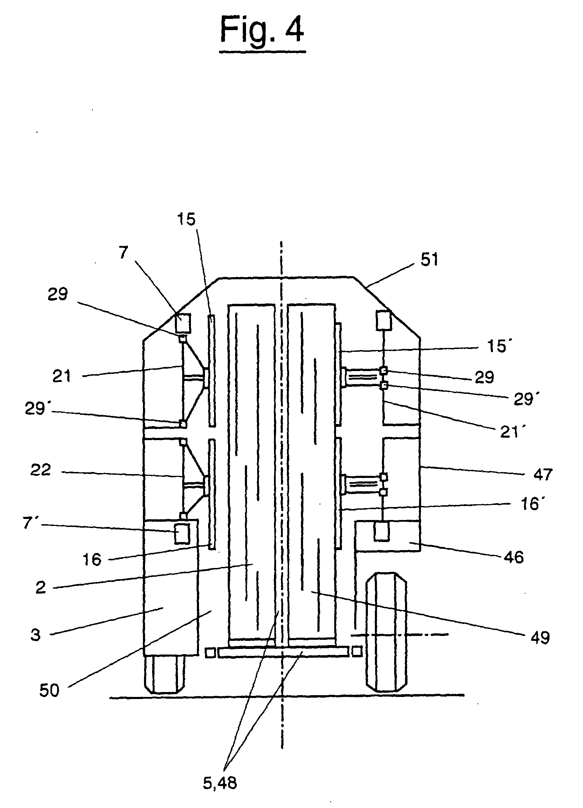

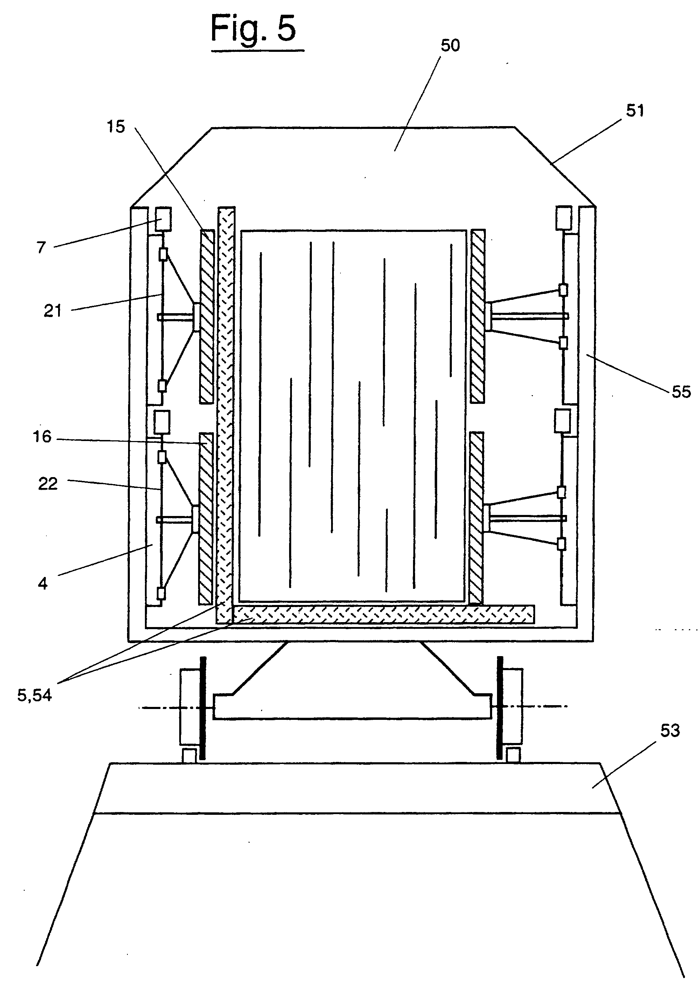

Offen bleibt, ob es sich hier um eine Ladungssicherungsanlage 1 für Lastkraftwagen oder Eisenbahnwagen 3, 4 handelt. Die hier gezeigte Ladungssicherungsanlage 1 ist für beide Transportmittel, wie anhand der Figuren 4 und 5 verdeutlicht, einsetzbar.

Das Glasscheibenpaket 2 besteht aus mehreren Glasstößen oder Glasscheiben 11, 12, 14, wobei diese über Distanzstücke 10, 13 auf Abstand gehalten sind. Die Distanzstücke 10, 13 verlaufen im gezeigten Ausführungsbeispiel in horizontaler Richtung und jeweils gleicher Höhe, sodass eine gleichmäßige Abstützung über die Sicherungsplatten 6 möglich ist.

Fig. 1 zeigt, dass hier Sicherungsplatten 6 in Form von übereinander angeordneten Sicherungstafeln 15, 16 zum Einsatz kommen. Diese Sicherungstafeln 15, 16 sind großflächig dimensioniert und verlaufen über die gesamte Länge eines entsprechenden Glasscheibenpaketes 2 bzw. über die gesamte Länge eines solchen Transportfahrzeuges.

Die einzelnen Sicherungstafeln 15, 16 drücken jeweils über mehrere Distanzstücke 10, 13 gegen das Glasscheibenpaket 2, wobei die einzelnen Sicherungstafeln 15, 16 das Glasscheibenpaket 2 nach vorn und hinten überragen können, wobei das Glasscheibenpaket 2 immer mittig auf dem Gestell 5 angeordnet ist.

Die einzelnen Sicherungstafeln 15, 16 sind mit Steuerspindeln 21, 22 versehen, die über Spindelantriebe 7 angetrieben, d. h. in Drehung versetzt sind. Sie sind in einem oberen Stützbock 24 und einem unteren Stützbock 25 gelagert und im Bereich der Mitte über einen weiteren Stützbock 26 geführt, der bis zur jeweiligen Sicherungstafel 15, 16 führt.

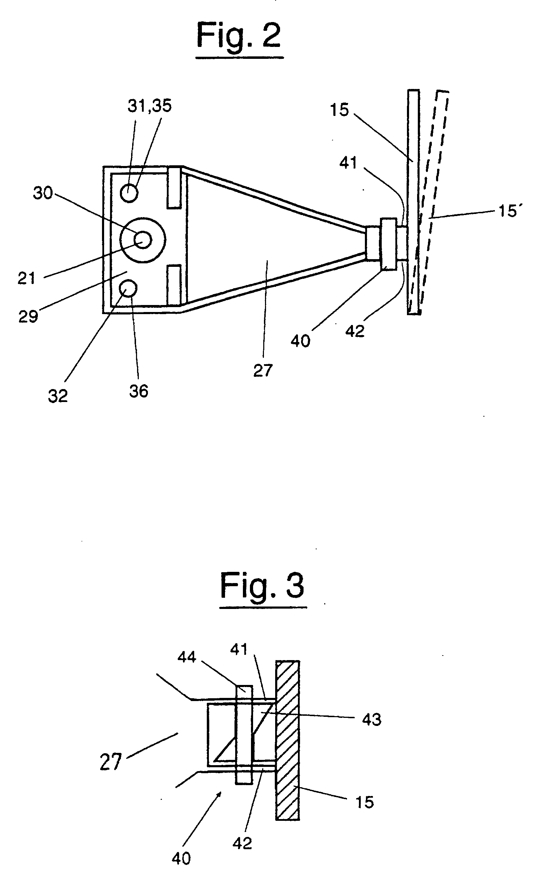

Fig. 2 verdeutlicht, dass die Steuerungsarme 27, 28 über Führungsplatten 29 verfügen, die mittig eine Bohrung 30 aufweisen, die ein Gewinde aufweist, das mit dem der Steuerspindeln 21, 22 übereinstimmt. Dabei sind die Steuerspindeln 21, 22 mit einem Linksgewinde 33 bzw. einem Rechtsgewinde 34 ausgerüstet, sodass beim Drehen der Steuerspindel 21, 22 über den Spindelantrieb 7 die Führungsplatte 29, 29' sich in Richtung mittlerem Stützbock 26 oder von diesem wegbewegt, je nach Drehrichtung des Spindelantriebes 7.

Die einzelnen Führungsplatten 29, 29' verfügen darüber hinaus über Führungsbohrungen 31, 32, sodass entsprechend vorgesehene Gleitführungsstangen 35, 36 für ein gleichmäßiges Auf- und Abbewegen der Führungsplatte 29, 29' sorgen können.

Die Verbindung zwischen Steuerungsarm 27, 28 und Sicherungstafel 15, 16 erfolgt über einen Lagerbock 40, der insbesondere in Fig. 3 dargestellt ist. Zwischen den Stegen 41, 42 ist eine senkrechte Achse 44 angeordnet, wobei durch die versetzte Bohrung 43 mit Schräganschliff sich eine vorteilhafte Lagerung ergibt, die eine Aufhängung der Druckplatte bis zu einem Winkel von 5° ermöglicht. Hiermit können alle Gestellneigungen stufenlos angefahren werden. Gleichzeitig wird hierdurch die jeweilige Sicherungstafel 15, 16 im aufgefahrenen Zustand in eine senkrechte Position gebracht, sodass durchgehend von unten bis oben eine gleiche Ladeschachtbreite bzw. ein entsprechender Laderaum 50 erreicht wird.

Fig. 4 zeigt einen Lastkraftwagen 3, der mit einem A-förmigen Gestell 48 beladen ist, auf dem Glasscheibenpakete 2 und 49 angeordnet sind. Sie stehen annähernd senkrecht, sodass eine erhebliche Menge an Glasscheiben 11, 12, 14 dort in Form der Glasscheibenpakete 2, 49 aufgestellt transportiert werden können. Die Glasscheibenpakete 2, 49 werden über die auf beiden Gestellseiten 8, 9 angeordneten Sicherungstafeln 15, 15', 16, 16' gesichert. Auf der rechten Seite der Darstellung nach Fig. 4 sind die Sicherungstafeln 15', 16' in Sicherungsposition wiedergegeben, auf der linken Seite dagegen in aufgefahrenem Zustand.

Die einzelnen Steuerspindeln 21, 22 für den Antrieb der Sicherungstafeln 15, 15', 16, 16' stützen sich auf dem Längsrahmen 46 des Lastkraftwagens 3 ab. Der jeweils untere Spindelantrieb 7 kann dabei in den Längsrahmen 46 integriert sein. Zur Abstützung an der ggf. versteiften Seitenwand 47 sind die einzelnen Steuerspindeln 21, 22 mit dieser verbunden. Der geschlossene Laderaum 50 wird durch ein entsprechendes Dach 51 abgedeckt.

Für den Transport von Glasscheibenpaketen 2 sind auch Eisenbahnwagen 4 einsetzbar, wobei Fig. 5 ein entsprechendes Schema wiedergibt. Auf der Gleisanlage 53 ist ein Eisenbahnwagen 4 mit einem L-förmigen Gestell 54 verfahrbar. Auf dem Gestell 54 ist ein entsprechend großes Glasscheibenpaket 2 abgelagert.

Auf der linken Seite der Darstellung nach Fig. 5 sind die einzelnen Sicherungstafeln 15, 16 zur Absicherung und Abstützung des L-förmigen Gestells 54 vorgesehen, während sie auf der rechten Seite gegen das Glasscheibenpaket 2 ausgefahren sind, um dieses entsprechend abzusichern. Die Seitenwände 55 des Eisenbahnwagens 4 können so versteift sein, dass sie die einzelnen Steuerspindeln 21, 22 ausreichend absichern und dafür sorgen, dass die notwendigen Andruckkräfte und Andrucksicherungskräfte auf das Glasscheibenpaket 2 aufgebracht werden können.

## Patentansprüche

1. Anlage zur Sicherung von auf einem A- oder L-Gestell (5) auf Lastkraft- oder Eisenbahnwagen (3, 4) verladenen, mit Distanzstücken (10, 13) auf Abstand gehaltenen, aufrecht stehenden Glasscheiben (11, 12, 14) mit verschwenkbar angeordneten, großflächigen Sicherungstafeln (6, 15, 16) beiderseits des Gestells (5) mit den Glasscheiben (11, 12, 14), die mehrere Distanzstücke (10, 13) überdeckend, die Glasscheiben (11, 12, 14) aneinander und an das Gestell (5) andrücken, wobei den Sicherungstafeln (6, 15, 16) ein ihre horizontale Bewegung erbringender Spindelantrieb (7) mit Steuerspindel (21, 22) zugeordnet ist, der mit der jeweiligen Sicherungstafel (6, 15 16) über einen Lagerbock (40) begrenzt verschwenkbar verbunden ist.

2. Anlage nach Anspruch 1,
**dadurch gekennzeichnet,**
dass je Gestellseite (8, 9) übereinander liegend zwei Sicherungstafeln (6, 15, 16) angeordnet sind.

3. Anlage nach Anspruch 1,
**dadurch gekennzeichnet,**
dass die Sicherungstafeln (6, 15, 16) als Wabenplatten aus Aluminium ausgebildet sind.

4. Anlage nach Anspruch 1,
**dadurch gekennzeichnet,**
dass jeder Spindelantrieb (7) eine Steuerspindel (21, 22) mit Trapezfeingewinde aufweist, die in zwei, mit Abstand angeordneten Stützböcken (24, 25) drehbar gelagert sind.

5. Anlage nach Anspruch 1,
**dadurch gekennzeichnet,**
dass die Sicherungstafel (15, 16) über gelenkig mit ihr verbundene Steuerungsarme (27, 28) mit auf der Steuerspindel (21, 22) verschiebbar angeordneten und ausgebildeten Führungsplatten (29) gelenkig verbunden ist, wobei die Führungsplatten (29) über eine Bohrung (30) mit der Steuerspindel (21, 22) angepasstem Gewinde verfügen.

6. Anlage nach Anspruch 1 und Anspruch 4,
**dadurch gekennzeichnet,**
dass die Steuerspindel (21, 22) hälftig ein Links- und ein Rechtsgewinde (34) aufweisend ausgebildet ist.

7. Anlage nach Anspruch 1 und einem oder mehreren der Ansprüche 2 bis 6,
**dadurch gekennzeichnet,**
dass beidseitig der Steuerspindel (21, 22) Gleitführungsstangen (35, 36) angeordnet sind, die in dem oberen und unteren Stützbock (24, 25) gelagert und über die Führungsplatten (29) mit korrespondierenden Führungsbohrungen (31, 32) seitlich hin ausreichend ausgebildet sind.

8. Anlage nach Anspruch 1 und Anspruch 4,
**dadurch gekennzeichnet,**
dass genau mittig ein weiterer Stützbock (26) vorgesehen und mit der Sicherungstafel (15, 16) verbunden ist.

9. Anlage nach Anspruch 1, Anspruch 5 und Anspruch 8,
**dadurch gekennzeichnet,**
dass die Sicherungstafel (15, 16) mittig einen Lagerbock (40) aufweist, mit dem die Steuerungsarme (27, 28) gelenkig verbunden und an dem der weitere Stützbock (26) fixiert ist.

10. Anlage nach Anspruch 9,
**dadurch gekennzeichnet,**
dass der Lagerbock (40) begrenzt verschwenkbar mit der Sicherungstafel (15, 16) verbunden ist.

11. Anlage nach Anspruch 9,
**dadurch gekennzeichnet,**
dass die Steuerungsarme (27, 28) mit ihrer Achse (44) in einer senkrechten Bohrung (43) mit einer Schrägstützflächen im Lagerbock (40) ergebender Zusatzbohrung gelagert ist.

12. Anlage nach Anspruch 1,
**dadurch gekennzeichnet,**
dass der Spindelantrieb (7) als an die vorhandene Fahrzeugenergieversorgung anschließbarer Motor, vorzugsweise als Druckluftmotor ausgebildet ist.

13. Anlage nach Anspruch 1 und Anspruch 12,
**dadurch gekennzeichnet,**
dass jeder Steuerspindel (21, 22) ein Spindelantrieb (7) zugeordnet ist, der mit den Spindelantrieben (7') der anderen Steuerspindeln (21, 22), zumindest der dergleichen Gestellseite (8; 9) in Reihe geschaltet steuerbar ist.

14. Anlage nach Anspruch 1,
**dadurch gekennzeichnet,**
dass die Steuerspindeln (21, 22) und die Spindelantriebe (7) auf oder in den Längsrahmen (46) des Fahrzeuges (3, 4) und/oder an dessen Seitenwänden (47, 55) gelagert sind.

15. Anlage nach Anspruch 1,
**dadurch gekennzeichnet**,
dass die Steuerspindeln (21, 22) senkrecht und die Steuerungsarme (27, 28) nahezu senkrecht dazu angeordnet sind.

16. Anlage nach Anspruch 1,
**dadurch gekennzeichnet,**
dass die Steuerspindeln (21, 22) horizontal angeordnet und die Steuerungsarme (27, 28) in einer horizontalen Ebene bewegbar sind.

## Claims

1. Load securing device for securing glass sheets (11, 12, 14) which are by means A or L type racks loaded on trucks or railway waggons (3, 4) in upright position and in spacedapart relation using spacer blocks (10, 13) disposed between said sheets, wherein said device is provided with swingable large-area securing panels (6, 15, 16) on either side of the rack (5) to keep said glass sheets (11, 12, 14) which panels, while covering up a plurality of spacer blocks (10, 13), act to press the glass sheets (11, 12, 14) against one another and against the rack (5), wherein said securing panels (6, 15, 16) have a spindle drive (7) with control spindle (21, 22) allocated to them to produce a horizontal movement, and wherein said spindle drive is in communication with the respective securing panel (6, 15, 16) via a bearing block (40) in a manner permitting restricted swinging movements.

2. Device as claimed in Claim 1, characterized by the fact that two vertically superimposed securing panels (6, 15, 16) are provided on either rack side (8, 9).

3. Device as claimed in Claim 1, characterized by the fact that the securing panels (6, 15, 16) are provided in the form of honeycombed aluminium plates.

4. Device as claimed in Claim 1, characterized by the fact that each spindle drive (7) has a control spindle (21, 22) with fine trapezoidal thread, said control spindles being rotatably arranged in spaced-apart pedestals (24, 25).

5. Device as claimed in Claim 1, characterized by the fact that via control arms (27, 28) articulated to them the securing panels (15, 16) are hinged to shiftable guide plates (29) provided with a bore (30) having a thread adapted to engage the control spindle (21, 22).

6. Device as claimed in Claim 1 and 4, characterized by the fact that one half of said control spindle (21, 22) is provided with a left-hand and the other with a right-hand thread (34).

7. Device as claimed in Claim 1 or any of the Claims 2 to 6, characterized by the fact that skid guide rods (35, 36) are provided on either side of said control spindles (21, 22) which are arranged in said top and bottom pedestals (24, 25) and adapted to protrude beyond the sides of the guide plates (29) provided with corresponding guide bores (31, 32).

8. Device as claimed in Claim 1 and 4, characterized by the fact that another pedestal (26) is provided exactly in center and connected to said securing panels (15, 16).

9. Device as claimed in Claim 1, 5 and 8 characterized by the fact that said securing panels (15, 16) are provided with a pedestal (40) in the center thereof to which said control arms (27, 28) are hinged and to which said additional pedestal (26) is fixed.

10. Device as claimed in Claim 9, characterized by the fact that said pedestal (40) is connected to said securing panels (15, 16) in a manner permitting restricted swinging movements.

11. Device as claimed in Claim 9, characterized by the fact that the control arms (27, 28) have their axle (44) disposed in a vertical bore (43) with an additional bore providing sloping support faces in said pedestal (40).

12. Device as claimed in Claim 1, characterized by the fact that the spindle drive (7) is provided in the form of a motor that is adapted for connection to the vehicle's own energy supply system, preferably in the form of a pneumatic motor.

13. Device as claimed in Claim 1 and 12, characterized by the fact that each spindle (21, 22) has one spindle drive (7) allocated to it which is controllable in series-connected mode with the spindle drive (7') of any other of the control spindles (21, 22), at least those commonly disposed on one of the rack sides (8, 9).

14. Device as claimed in Claim 1, characterized by the fact that the control spindles (21, 22) and the spindle drives (7) are arranged on or in longitudinal frame members (46) of the vehicle (3,4) and/or the sidewalls (47, 55) thereof.

15. Device as claimed in Claim 1, characterized by the fact that the control spindles (21, 22) are disposed vertically and the control arms (27, 28) are arranged in a substantially vertical position.

16. Device as claimed in Claim 1, characterized by the fact that the control spindles (21, 22) are disposed horizontally and the control arms (27, 28) are movable in a horizontal plane.

## Revendications

1. Dispositif de fixation de paquets de feuilles de verre (11, 12, 14) chargés verticalement sur un cadre (5) en forme de A ou de L sur un camion ou un wagon de chemin de fer (3, 4), et maintenus écartés par des éléments d'espacement (10, 13), comportant des plaques de calage (6, 15, 16) de grandes dimensions, montées pivotantes de chaque côté du cadre (5) portant les panneaux de verre (11, 12, 14), qui, en s'étendant sur plusieurs éléments d'espacement (10, 13), pressent les panneaux de verre (11, 12, 14) les uns contre les autres et contre le cadre (5), un mécanisme d'entraînement (7) avec une vis de commande (21, 22) qui produit un déplacement horizontal étant associé aux plaques de calage, lequel mécanisme d'entraînement est lié par l'intermédiaire d'un bloc palier (40), avec possibilité de pivotement limité, à la plaque de calage concernée (6, 15, 16).

2. Dispositif selon la revendication 1, **caractérisé en ce que** deux plaques de calage (6, 15, 16) sont disposées l'une au-dessus de l'autre sur chaque côté (8, 9) du cadre.

3. Dispositif selon la revendication 1, **caractérisé en ce que** les plaques de calage (6, 15, 16) sont conformées en plaques en nid d'abeilles en aluminium.

4. Dispositif selon la revendication 1, **caractérisé en ce que** chaque mécanisme d'entraînement (7) comprend une vis de commande (21, 22) avec un filetage trapézoïdal fin, qui est montée tournante dans deux supports (24, 25) espacés.

5. Dispositif selon la revendication 1, **caractérisé en ce que** la plaque de calage (15, 16) est liée de manière articulée à des plaques de guidage (29) montées mobiles sur la vis de commande (21, 22), par l'intermédiaire de bras de commande (27, 28) liés de manière articulée à ladite plaque de calage, les plaques de guidage (29) étant pourvues d'un trou (30) avec un filetage adapté à la vis de commande (21, 22).

6. Dispositif selon la revendication 1 et la revendication 4, **caractérisé en ce que** la vis de commande (21, 22) comporte sur une moitié un filetage à gauche et sur l'autre moitié un filetage à droite (34).

7. Dispositif selon la revendication 1 et une ou plusieurs des revendications 2 à 6, **caractérisé en ce que** de chaque côté de la vis de commande (21, 22) sont disposées des barres de guidage (35, 36) lisses, qui sont montées dans les supports (24, 25) supérieur et inférieur et sur lesquelles les plaques de guidage (29) s'emboîtent latéralement par des trous de guidage (31, 32) adaptés.

8. Dispositif selon la revendication 1 et la revendication 4, **caractérisé en ce qu**'un support supplémentaire (26) est prévu au milieu exactement et est lié à la plaque de calage (15, 16)

9. Dispositif selon la revendication 1, la revendication 5 et la revendication 8, **caractérisé en ce que** la plaque de calage (15, 16) comporte en son milieu un bloc palier (40), auquel les bras de commande (27, 28) sont liés de manière articulée et auquel est fixé le support (26) supplémentaire.

10. Dispositif selon la revendication 9, **caractérisé en ce que** le bloc palier (40) est lié à la plaque de calage (15,16) avec possibilité de pivotement limité.

11. Dispositif selon la revendication 9, **caractérisé en ce que** les bras de commande (27, 28) avec leur axe (44) sont montés dans un trou (43) vertical avec un trou additionnel définissant des surfaces d'appui inclinées dans le bloc palier (40).

12. Dispositif selon la revendication 1, **caractérisé en ce que** le mécanisme d'entraînement (7) est conformé en moteur pouvant être connecté à l'alimentation en énergie existante du véhicule, de préférence en moteur à air comprimé.

13. Dispositif selon la revendication 1 et la revendication 12, **caractérisé en ce qu**'à chaque vis de commande (21, 22) est associé un mécanisme d'entraînement (7), qui est connecté en série avec les mécanismes d'entraînement (7') des autres vis de commande (21, 22), au moins d'un même côté de cadre (8, 9).

14. Dispositif selon la revendication 1, **caractérisé en ce que** les vis de commande (21, 22) et les mécanismes d'entraînement (7) sont montés sur ou dans les longerons (46) du véhicule et/ou sur les parois latérales (47, 55) de celui-ci.

15. Dispositif selon la revendication 1, **caractérisé en ce que** les vis de commande (21, 22) sont disposées verticalement et les bras de commande (27, 28) sont pratiquement perpendiculaires à celles-ci.

16. Dispositif selon la revendication 1, **caractérisé en ce que** les vis de commande (21, 22) sont disposées horizontalement et les bras de commande (27, 28) se déplacent dans un plan horizontal.
